# EUROPÄISCHE PATENTANMELDUNG

(11) **EP 0 607 608 A1**
(43) Veröffentlichungstag der Anmeldung: **27.07.1994**
(21) Anmeldenummer: 93120867.2
(22) Anmeldetag: 24.12.1993
(51) Int. Cl.: B23B 5/16, B23C 3/12

(54) **Gerät zum Anfasen bzw. Entgraten der Kanten von Werkstücken**

(30) Priorität: 21.01.1993 DE 9300731 U; 29.04.1993 DE 9306445 U
(71) Anmelder: Dischler, Helmut, Dipl.-Ing., D-41464 Neuss (DE)
(72) Erfinder: Dischler, Helmut, Dipl.-Ing., D-41464 Neuss (DE)
(74) Vertreter: Paul, Dieter-Alfred, Dipl.-Ing.

(57) **Zusammenfassung**

Ein Gerät zum Anfasen bzw. Entgraten der Kanten von Werkstücken weist auf einer Antriebswelle sitzenden Fräwerkzeug auf. Damit auf einfacher Weise eine gleichmäßige Fase reproduzierbar erzeugt werden kann, hat das Gerät folgende Merkmale:
a) das Gerät (1, 15) hat eine ebene Stützfläche (8, 22,31, 38) zum Aufsetzen des Werkstückes (13, 30, 36, 39);
b) das Fräswerkzeug (4, 18) steht derart über die Ebene der Stützfläche (8, 22, 31, 38) vor, daß ein auf die Sützfläche (8, 22, 31, 38) aufgesetztes Werkstück (13, 30, 36, 39) an das Fräswerkzeug (4, 18) anfahrbar ist;
c) es ist wenigstens ein Anschlagelement (6, 19) für die Begrenzung der Frästiefe beim Fräsvorgang vorgesehen.

## Beschreibung

Die Erfindung betrifft ein Gerät zum Anfasen bzw. Entgraten der Kanten von Werkstücken, insbesondere von Rohrenden, mit einem auf der Antriebswelle eines Antriebsmotors sitzenden Fräswerkzeug.

Insbesondere Rohrenden aus Metall bedürfen - bevor sie weiterverarbeitet werden - einer Anfasung bzw. einer Entgratung der Kanten. Dies geschieht gewöhnlich von Hand mit einer Feile. Es können jedoch auch Geräte verwendet werden, die einen Antriebsmotor aufweisen, auf dessen Antriebswelle ein entsprechendes Fräswerkzeug sitzt. Die Geräte können dann von Hand an das Rohrende herangeführt werden. Dabei ist es nicht einfach, das Gerät zu halten und eine gleichmäßige Fase über den Umfang des Rohrendes zu erzeugen.

Der Erfindung liegt die Aufgabe zugrunde, ein Gerät der eingangs genannten Art so zu gestalten, daß mit ihm auf einfache Weise eine gleichmäßige Fase reproduzierbar erzeugt werden kann, und zwar auch bei schief abgeschnittenen Rohren. Diese Aufgabe wird erfindungsgemäß durch ein Gerät gelöst, das durch folgende Merkmale gekennzeichnet ist:
a) das Gerät hat eine ebene Stützfläche zum Aufsetzen des Werkstückes;
b) das Fräswerkzeug steht derart über die Ebene der Stützfläche vor, daß ein auf die Stützfläche aufgesetztes Werkstück an das Fräswerkzeug anfahrbar ist;
c) es ist wenigstens ein Anschlagelement für die Begrenzung der Frästiefe beim Fräsvorgang vorgesehen.

Nach der Erfindung hat das Gerät eine Stützfläche, auf die die Stirnseite des Werkstückes aufgesetzt und in deren Ebene es nach dem Aufsetzen seitlich verschoben werden kann. Dabei kann das Werkstück gegen das über die Stützfläche vorstehende Fräswerkzeug geschoben werden. Ein zusätzliches Anschlagelement zur Begrenzung der Seitwärtsbewegung des Werkstückes und damit der Frästiefe sowie die Abstützung auf der Stützfläche sorgen dafür, daß eine über den Umfang gleichmäßige und jederzeit reproduzierbare Fase erzeugt wird. Bei einem Abkippen des Werkstückes gegenüber der Stützfläche wirkt das Anschlagelement gleichzeitig als Gelenk, so daß die Stirnseite des Werkstückes sich von dem Fräswerkzeug wegbewegt. Die Einformung der Fase ist also nur dann möglich, wenn das Werkstück mit seiner Stirnseite auf der Stützfläche aufliegt. Ein besonderer Vorzug der Erfindung besteht darin, daß das Werkstück nicht gegenüber dem Fräswerkzeug verdreht werden muß, sondern um das Fräswerkzeug translatorisch auf einer Kreisbahn herumgeführt bzw. umgekehrt das Fräswerkzeug an der zu bearbeitenden Kante des Werkstückes vorbeigeführt werden kann. Weder das Werkstück noch das Gerät müssen für den Fräsvorgang gedreht werden.

In Ausbildung der Erfindung ist vorgesehen, daß das Fräswerkzeug kegelstumpfförmig ausgebildet ist, wobei die Außenfläche im Axialschnitt gerade, aber auch konkav oder konvex gekrümmt ausgebildet sein kann, und daß es teilweise über die Ebene der Stützfläche vorsteht. Sofern die Fase eine andere Form haben soll, kann das Fräswerkzeug entsprechend ausgebildet sein.

Die Stützfläche ist vorzugsweise als sich quer zur Drehachse der Antriebswelle erstreckende Stützplatte ausgebildet, die zweckmäßigerweise einen kreisrunden Umfang hat. Dabei sollte das Fräswerkzeug über eine Öffnung in der Stützplatte vorstehen, die zweckmäßigerweise in der Mitte der Stützplatte vorgesehen ist. Dies ermöglicht die Einformung einer Fase sowohl an der Außen- als auch an der Innenkante eines offenen Rohrendes.

In weiterer Ausgestaltung der Erfindung ist vorgesehen, daß die vorzugsweise als Stützplatte ausgebildete Stützfläche um eine zur Antriebswelle koaxiale oder parallele Achse drehbar gelagert ist. Dies erleichtert die gegenseitige Führung von Fräswerkzeug und Werkstück um vorbeschriebenen Sinn.

In besonders bevorzugter Ausführungsform ist das Anschlagelement bzw. eines der Anschlagelemente auf dem freien Ende der Antriebswelle - möglichst als frei drehbare Stützrolle - angeordnet bzw. gelagert. Dabei sollte es kugelförmig ausgebildet sein.

Um ein Wegfliegen der Späne zu vermeiden, sollte ein Fangkorb, beispielsweise in Form eines Umfangsteges, vorgesehen sein. In einfacher Ausführung umgibt der Fangkorb die Stützfläche gerätefest und ist zweckmäßigerweise geschlossen ausgebildet. Hierbei kann er auch exzentrisch zum Fräswerkzeug angeordnet sein. Allerdings verbreitert ein solchermaßen ausgestalteter Fangkorb das Gerät.

Alternativ dazu ist deshalb vorgeschlagen, daß der Fangkorb U-förmig ausgebildet ist, wobei sich die freien Enden der U-Schenkel des Fangkorbes im Bereich des Fräswerkzeuges befinden. Der Fangkorb kann dann das Fräswerkzeug eng umschließen. Dabei ist es von Vorteil, wenn wenigstens einer der U-Schenkel des Fangkorbes vom Fräswerkzeug wegbewegbar gelagert ist, so daß sich die Enden der U-Schenkel an das Werkstück unabhängig von dessen Geometrie anlegen können. Dies kann auf mehrere Weise verwirklicht werden, beispielsweise in der Form, daß der Fangkorb als Ganzes gegen die Wirkung einer Feder vom Fräswerkzeug wegbewegbar ist oder daß die U-Schenkel gegen eine Federwirkung auseinanderspreizbar sind. Dabei sollte der so ausgebildete Fangkorb um das Fräswerkzeug drehbar gelagert sein. In einfacher Ausführung sollte dabei der Fangkorb auf der Stützfläche angeordnet und die Stützfläche um eine zur Antriebswelle koaxiale oder parallele Achse drehbar gelagert sein.

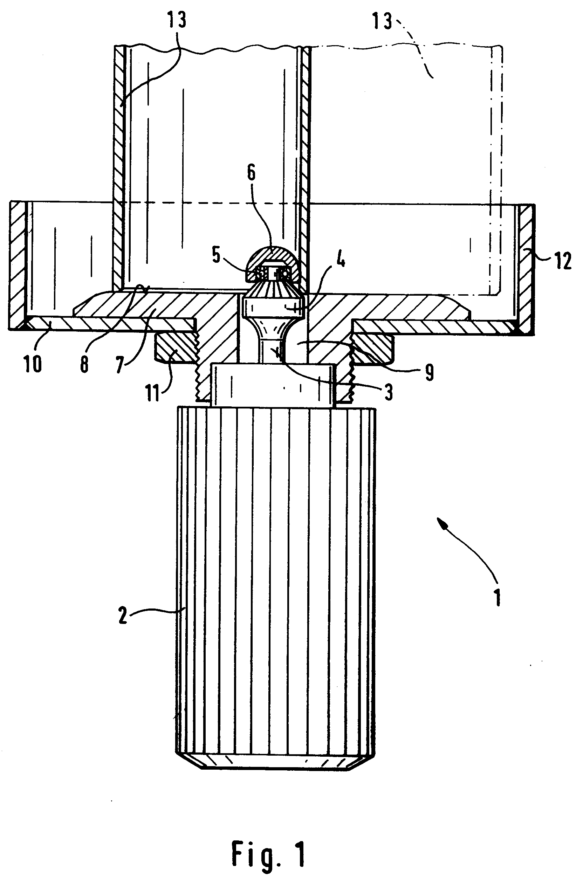

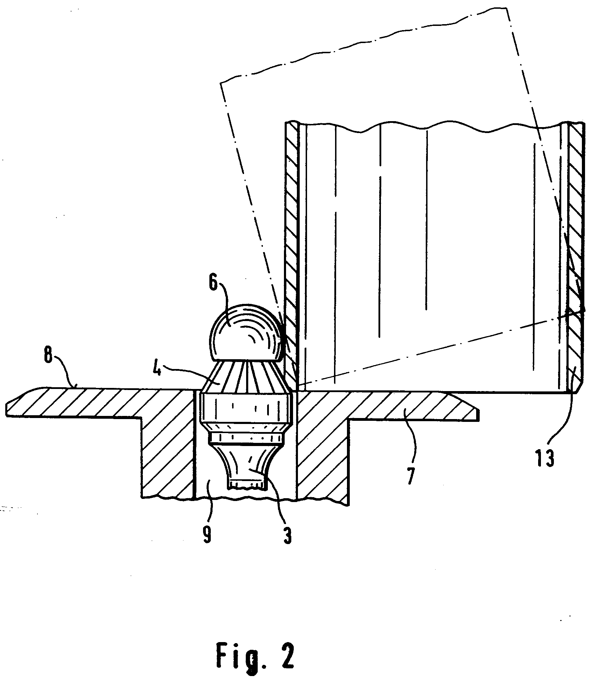

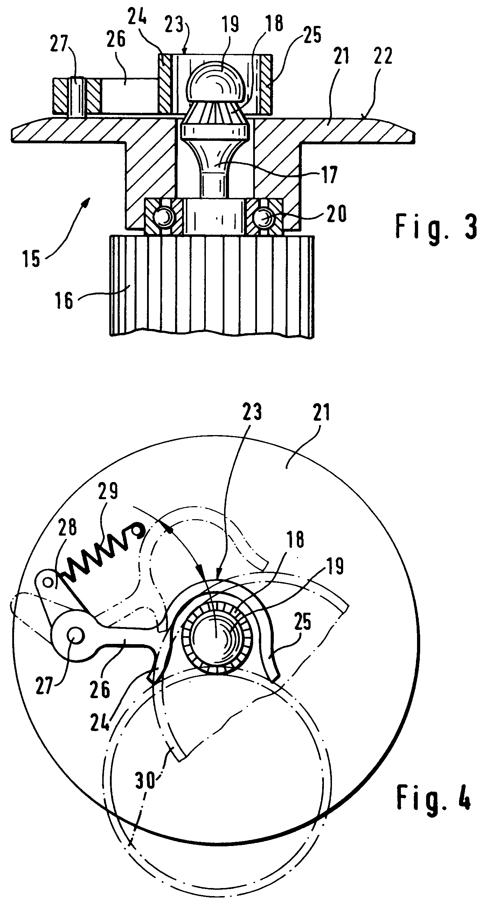

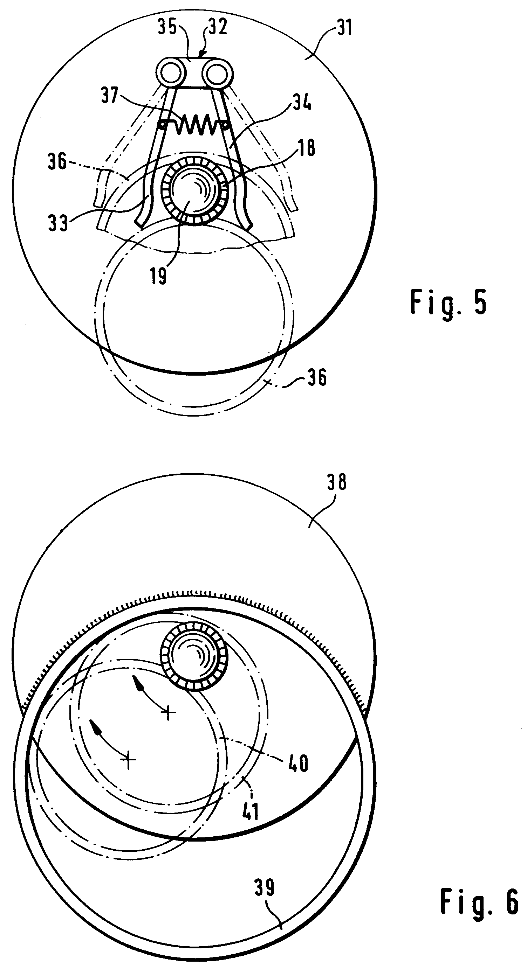

In der Zeichnung ist die Erfindung an Hand von Ausführungsbeispielen näher veranschaulicht. Es zeigen:
- Figur (1): ein erfindungsgemäßes Gerät zum Anfasen bzw. Entgraten der Kanten von Werkstücken in der Seitenansicht mit Teilschnittdarstellung;
- Figur (2): eine vergrößerte Teilschnittdarstellung des Gerätes gemäß Figur (1);
- Figur (3): ein anderes Gerät zum Anfasen bzw. Entgraten der Kanten von Werkstücken in der Seitenansicht mit Teilschnittdarstellung;
- Figur (4): eine Draufsicht auf das Gerät gemäß Figur (3);
- Figur (5): eine Draufsicht auf das Gerät gemäß Figur (3) mit einem anderen Fangkorb;
- Figur (6): eine Draufsicht auf das Gerät gemäß Figur (3) mit einem abgewandelten Fangkorb.

Das in den Figuren (1) und (2) dargestellte Gerät (1) hat einen gekapselten Antriebsmotor (2) in Form eines Elektromotors und eine aus diesem axial herausragende Antriebswelle (3). Auf der Antriebswelle (3) sitzt ein kegelstumpfförmiges Fräswerkzeug (4). Auf dem freien Ende der Antriebswelle (3) ist über ein Wälzlager (5) eine kugelkalottenförmige Stützrolle (6) frei drehbar gelagert.

Auf dem obenseitigen Ende des Antriebsmotors (2) ist eine Stützplatte (7) befestigt, die einen kreisförmigen Umfang und eine ebene Stützfläche (8) hat, die sich senkrecht zur Achse der Antriebswelle (3) erstreckt. Die Stützplatte (7) hat eine Durchgangsöffnung (9), die von der Antriebswelle (3) durchfaßt wird. Die Stützfläche (8) korrespondiert mit dem Fräswerkzeug (4) in der Weise, daß das Fräswerkzeug (4) im wesentlichen über die Stützfläche (8) vorsteht.

An der der Stützfläche (8) abgewandten Seite der Stützplatte (7) befindet sich eine Ringscheibe (10), die von einer Ringmutter (11) gegen die Stützplatte (7) verspannt ist. Der Umfang der Ringscheibe (10) ist kreisrund. An ihm ist ein Ringmantel (12) befestigt, der von der Ringscheibe (10) über die Ebene der Stützfläche (9) vorsteht. Ringscheibe (10) und Ringmantel (12) dienen als Fangkorb für Späne, die von dem Fräswerkzeug (4) beim Fräsvorgang radial nach außen geschleudert werden.

Für das Entgraten und Abfasen der Kanten eines Rohrendes wird das Gerät (1) wie folgt verwendet.

Das Gerät (1) kann von Hand bedient werden. Es besteht jedoch auch die Möglichkeit, es ortsfest zu installieren. In beiden Fällen werden Gerät (1) und ein Rohrende (13) zunächst so zusammengeführt, daß das Rohrende (13) mit seiner gesamten Stirnfläche auf der Stützfläche (8) aufliegt. Für die Entgratung der Außenkante wird das Rohrende (13) neben dem Fräswerkzeug (4) auf die Stützfläche (8) aufgesetzt und dann unter Beibehaltung der Auflage gegen das Fräswerkzeug (4) bei eingeschaltetem Antriebsmotor (2) verschoben. Durch Bewegung des Rohrendes (13) um das Fräswerkzeug (4) wird eine Fase in die Außenkante des Rohrendes (13) über den gesamten Umfang eingeformt. Die Größe der Fase wird dabei durch die Stützrolle (6) begrenzt, an die der Mantel des Rohrendes (13) nach Erreichen der vorgesehenen Einfrästiefe zur Anlage kommt. Der Durchmesser der Stützrolle (6) ist nämlich etwas geringer als der Durchmesser des Fräswerkzeuges (4) in der Ebene der Stützfläche (8). Auf diese Weise wird eine gleichmäßige Fase über den gesamten Umfang des Rohrendes (13) erzeugt.

In der Figur (1) ist das Rohrende (13) in der rechten Hälfte in einer Stellung zur Einformung einer Fase an der Außenkante dargestellt. In der linken Hälfte ist das Rohrende (13) in einer Stellung gezeichnet, in der das Fräswerkzeug (4) und die Stützrolle (6) in das Innere des Rohrendes (13) hineinragen. Durch Verschieben des Rohrendes (13) nach außen wird dessen Innenkante gegen das Fräswerkzeug (4) gefahren. Durch Bewegung des Rohrendes (13) um das Fräswerkzeug (4) kann die Innenkante des Rohrendes (13) angefast und entgratet werden, wobei auch hierbei das Rohrende (13) nicht gedreht werden muß. Dabei sorgt die Stützrolle (6) dafür, daß eine gleichmäßig tiefe Fase über den gesamten Umfang erzeugt wird.

In Figur (2) ist das Rohrende (13) für die Einformung einer Fase entsprechend der Darstellung gemäß Figur (1) eingezeichnet. Des weiteren ist das Rohrende (13) in einer zum Fräswerkzeug (4) gekippten Stellung eingezeichnet. Es ist zu sehen, daß in diesem Fall, der bei unsachgemäßer Bedienung des Gerätes (1) auftreten kann, die Stützrolle (6) als Schwenklager mit der Folge wirkt, daß die Außenkante des Rohrendes (13) sich von dem Fräswerkzeug (4) wegbewegt. Auf diese Weise wird verhindert, daß es bei unsachgemäßer Anlage des Rohrendes (13) auf die Stützfläche (8) zu einem Fräsvorgang kommt, der eine ungleichmäßige Einformung der Fase zur Folge hätte.

Es versteht sich, daß das vorbeschriebene Gerät (1) nicht nur zur Herstellung von Fasen an Rohrenden (13) geeignet ist, sondern daß solche Fasen und damit eine Entgratung auch bei Werkstücken möglich ist, die aus Vollmaterial bestehen und dabei eine ebene Stirnseite haben, mit der sie flächig auf der Stützfläche (8) zur Anlage gebracht werden können.

Das in den Figuren (3) und (4) dargestellte Gerät (15) hat - wie das Gerät (1) gemäß den Figuren (1) und (2) - einen Antriebsmotor (16) in Form eines Elektromotors und eine aus diesem axial herausragende Antriebswelle (17). Auf dieser sitzt ein kegelstumpfförmiges Fräswerkzeug (18). Auf dem freien Ende der Antriebswelle (17) ist eine kugelkalottenförmige Stützrolle (19) frei drehbar gelagert.

Auf dem obenseitigen Ende des Antriebsmotors (16) befindet sich ein Wälzlager (20), auf dem eine Stützplatte (21) gegenüber dem Antriebsmotor (16) verdrehbar gelagert ist. Die Stützplatte (21) hat einen kreisförmigen Umfang und eine bis auf den Randbereich ebene Stützfläche (22). Auch hier korrespondiert die Stützfläche (22) mit dem Fräswerkzeug (18) in der Weise, daß das Fräswerkzeug (18) im wesentlichen über die Stützfläche (22) vorsteht.

Auf der Stützplatte (21) befindet sich ein Fangkorb (23), der U-förmig ausgebildet ist und zwei sich nach außen öffnende U-Schenkel (24, 25) aufweist. Einer der U-Schenkel (24, 25) ist an einem Schwenkhebel (26) angeformt, der schwenkbar an einer mit der Stützplatte (21) verbundenen Schwenkachse (27) verbunden ist. Der Schwenkhebel (26) weist einen Rückstellhebel (28) auf, der über eine Zugfeder (29) im Uhrzeigersinn beaufschlagt ist. Gegen die Wirkung der Zugfeder (29) kann der Fangkorb (23) aus der durchgezogen gezeichneten Stellung in die strichpunktiert dargestellte Stellung verschwenkt werden.

Das Entgraten und Abfasen der Kanten eines Rohrendes (30) geschieht in ähnlicher Weise wie bei dem Gerät (1) gemäß den Figuren (1) und (2). Für die Einformung einer Fase an der Außenkante wird das Rohrende (30) so an das Fräswerkzeug (18) herangeführt, daß die freien Enden der U-Schenkel (24, 25) an der Außenseite des Rohrendes (30) zu liegen kommen und damit die abgefrästen Späne von dem Fangkorb (23) vollständig aufgefangen werden. Dabei erleichtert die Drehbarkeit der Stützplatte (21) die Beibehaltung des Anliegens der U-Schenkel (24, 25) am Rohrende (30).

Für die Einformung einer Fase an der Innenkante des Rohrendes (30) wird der Fangkorb (23) gegen die Wirkung der Zugfeder (29) nach außen geschwenkt und das Rohrende (30) über das Fräswerkzeug (18) gestülpt, wie dies durch die hälftige Einzeichnung des Rohrendes (30) angedeutet ist. Auch in dieser Stellung kommen die U-Schenkel (24, 25) zur Anlage an der Außenseite des Rohrendes (30).

In Figur (5) ist das Gerät (15) mit einer anderen Stützplatte (31) ausgerüstet. Auch hier ist die Stützplatte (31) drehbar gelagert.

Auf der Stützplatte (31) ist ein ebenfalls im wesentlichen U-förmiger Fangkorb (32) angebracht. Er hat zwei langgestreckte U-Schenkel (33, 34), die jeweils schwenkbar an einer Halterung (35) gelagert sind, welche an der Stützplatte (31) befestigt ist. Die U-Schenkel rahmen das Fräswerkzeug (18) ein und stehen über dieses so weit vor, daß sie an einem angesetzten Rohrende (36) anliegen können. Eine Zugfeder (37) ist bestrebt, die U-Schenkel (33, 34) zusammenzuziehen.

Das Rohrende (36) ist zunächst für die Anfasung und Entgratung der Außenkante so angesetzt, wie vollständig dargestellt ist. Für die Anfasung und Entgratung der Innenkante werden die U-Schenkel (33, 34) auseinandergedrückt, und sie liegen dann nach Überstülpen des Rohrendes (36) über das Fräswerkzeug (18) an dessen Außenseite an, wie dies strichpunktiert angedeutet ist.

In Figur (6) ist eine weitere Ausführungsform des Gerätes (15) mit einer Stützplatte (38) dargestellt. Auf dieser Stützplatte (38) ist ein kreisrunder Fangkorb (39) exzentrisch zum Fräswerkzeug (18) angeschweißt. Dabei ist auch in diesem Fall die Stützplatte (38) drehbar gelagert.

Strichpunktiert eingezeichnet sind die Stellungen eines Rohrendes (40) bei der Anfasung und Entgratung der Außenkante und der Innenkante. Dabei wird die Anlage an der Innenseite des Fangkorbes (39) durch die drehbare Lagerung der Stützplatte (38) erleichtert.

## Patentansprüche

1. Gerät zum Anfasen bzw. Entgraten der Kanten von Werkstücken mit einem auf einer Antriebswelle sitzenden Fräswerkzeug, gekennzeichnet durch folgende Merkmale:
a) das Gerät (1, 15) hat eine ebene Stützfläche (8, 22, 31, 38) zum Aufsetzen des Werkstückes (13, 30, 36, 39);
b) das Fräswerkzeug (4, 18) steht derart über die Ebene der Stützfläche (8, 22, 31, 38) vor, daß ein auf die Stützfläche (8, 22, 31, 38) aufgesetztes Werkstück (13, 30, 36, 39) an das Fräswerkzeug (4, 18) anfahrbar ist;
c) es ist wenigstens ein Anschlagelement (6, 19) für die Begrenzung der Frästiefe beim Fräsvorgang vorgesehen.

2. Gerät nach Anspruch (1),
dadurch gekennzeichnet, daß das Fräswerkzeug (4, 18) kegelstumpfartig ausgebildet ist und teilweise über die Ebene der Stützfläche (8) vorsteht.

3. Gerät nach Anspruch (1) oder (2),
dadurch gekennzeichnet, daß die Stützfläche (8, 22, 31, 38) als sich quer zur Drehachse der Antriebswelle (3, 17) erstreckende Stützplatte (7, 21, 31, 38) ausgebildet ist.

4. Gerät nach Anspruch (3),
dadurch gekennzeichnet, daß die Stützplatte (8, 21, 31, 38) einen kreisrunden Umfang hat.

5. Gerät nach Anspruch (3) oder (4),
dadurch gekennzeichnet, daß das Fräswerkzeug (4, 18) über eine Öffnung (9) in der Stützplatte (7, 21, 31, 38) vorsteht.

6. Gerät nach Anspruch (5),
dadurch gekennzeichnet, daß die Öffnung (9) in der Mitte der Stützplatte (7, 21, 31, 38) vorgesehen ist.

7. Gerät nach einem der Ansprüche (1) bis (6),
dadurch gekennzeichnet, daß die Stützfläche (22, 31, 38) um eine zur Antriebswelle koaxiale oder parallele Achse drehbar gelagert ist.

8. Gerät nach einem der ansprüche (1) bis (7),
dadurch gekennzeichnet, daß das Anschlagelement (6) bzw. eines der Anschlagelemente auf dem freien Ende der Antriebswelle (3) angeordnet ist.

9. Gerät nach einem der Ansprüche (1) bis (8),
dadurch gekennzeichnet, daß das Anschlagelement (6) bzw. eines der Anschlagelemente als frei drehbar gelagerte Stützrolle ausgebildet ist bzw. sind.

10. Gerät nach einem der Ansprüche (1) bis (9),
dadurch gekennzeichnet, daß das Anschlagelement (6) kugelförmig ausgebildet ist bzw. sind.

11. Gerät nach einem der Ansprüche (1) bis (10),
dadurch gekennzeichnet, daß ein Fangkorb (12, 23, 32, 39) zum Auffangen von Frässpänen vorgesehen ist.

12. Gerät nach Anspruch (11),
dadurch gekennzeichnet, daß der Fangkorb (12) die Stützfläche (22) gerätefest umgibt.

13. Gerät nach Anspruch (11) oder (12),
dadurch gekennzeichnet, daß der Fangkorb (12, 39) geschlossen ausgebildet ist.

14. Gerät nach einem der Ansprüche (11) bis (13),
dadurch gekennzeichnet, daß der Fangkorb (39) exzentrisch zum Fräswerkzeug (18) angeordnet ist.

15. Gerät nach Anspruch (11),
dadurch gekennzeichnet, daß der Fangkorb (23, 32) U-förmig ausgebildet ist, wobei sich die freien Enden der U-Schenkel (24, 25, 33, 34) des Fangkorbs (23, 32) im Bereich des Fräswerkzeugs (18) befinden.

16. Gerät nach Anspruch (15),
dadurch gekennzeichnet, daß wenigstens einer der U-Schenkel (24, 25, 33, 34) des Fangkorbes (23, 32) vom Fräswerkzeug (18) wegbewebbar ist.

17. Gerät nach Anspruch (16),
dadurch gekennzeichnet, daß der Fangkorb (23) als Ganzes gegen die Wirkung einer Feder (29) vom Fräswerkzeug (18) wegbewegbar ist.

18. Gerät nach Anspruch (16),
dadurch gekennzeichnet, daß die U-Schenkel (33, 34) des Fangkorbs (32) gegen die Wirkung einer Feder (37) auseinanderspreizbar sind.

19. Gerät nach einem der Ansprüche (15) bis (18),
dadurch gekennzeichnet, daß der Fangkorb (23, 32, 39) um das Fräswerkzeug (18) drehbar gelagert ist.

20. Gerät nach einem der Ansprüche (11) bis (19),
dadurch gekennzeichnet, daß der Fangkorb (23, 32, 39) auf der Stützfläche (22, 31, 38) angeordnet und die Stützfläche (22, 31, 38) um eine zur Antriebswelle (17) koaxiale oder parallele Achse drehbar gelagert ist.
